# EUROPEAN PATENT APPLICATION

(11) **EP 1 864 756 A1**
(43) Date of publication of application: **12.12.2007**
(21) Application number: 06114961.3
(22) Date of filing: 05.06.2006
(51) Int. Cl.: B24D 13/14, B24D 18/00, B24D 11/00

(54) **A method of manufacturing buffing pads**

(71) Applicant: Apol AB, 832 96 Frösön (SE)
(72) Inventor: Olsson, Rolf Gunnar, 832 96, FRÖSÖN (SE); Apoy, Fredrik, 441 55, ALINGSÅS (SE)
(74) Representative: Engdahl, Stefan

(57) **Abstract**

This invention relates to a method of manufacturing buffing pads (11) by machine. The method includes:
- preparing a buffing layer (13) comprising standing threads (15), which comprise wool and synthetic strands;
- applying a remeltable polymer, heated to a liquid state, to the rear side of the buffing layer (13), the remeltable polymer constituting a laminating layer (19);
- preparing a backing layer (21), consisting of a cell foam plastic;
- joining the laminating layer (19) with the backing layer (21), comprising reheating the laminating layer (19) to an adhesive state; and pressing a front side of the backing layer (21) to a rear side of the laminating layer (19); and
- attaching an attachment layer (23) to a rear side of the backing layer (21).
Buffing pads (11) are cut out of either a resulting mat consisting of all layers or out of two parts, one comprising the buffing layer (13) and laminating layer (19) and the other comprising the backing layer (21) and attachment layer (23), which parts are then joined.

## Description

### FIELD OF THE INVENTION

The present invention relates to a method of manufacturing buffing pads and to a buffing pad.

### BACKGROUND OF THE INVENTION

Buffing pads exist in many different structures. The very buffing layer of interest here is one having a blend of standing wool and synthetic threads. This means that the threads are fixed at one end and extends from that end towards the front, or contact, surface. Typically, such buffing pads have thread lengths ranging from some millimetres up to several centimetres. For the purposes of this application, it should be noted that the term buffing pad encompasses the term polishing pad, which is equivalently used.

One example of a known buffing pad having a buffing layer of standing threads is the "blue light polishing wool pad", which is marketed by Rightlook.com, Inc. The buffing layer consists of a blend of 70% acrylic and 30% wool, which is good, for example, for removing light scratches from car paint. Rightlook.com, Inc. also markets a "yellow medium cutting wool pad", which is useful for removing medium to light scratches.

The known wool/synthetic buffing pads have a combined backing and attachment layer, which is flexible, and even soft. This layer primarily consists of a fabric, at which the wool and synthetic threads are fixed, typically by means of knitting, and a hook and loop fastener, typically a loop cloth, covering the rear side of the fabric. The known wool/synthetic buffing pads have a low firmness, and a limited capability of following, or adapting to, non-planar surfaces.

### SUMMARY OF THE INVENTION

It is an object of the present invention to provide a buffing pad that alleviates the above-mentioned drawbacks of the prior art.

This object is achieved by means of a method of manufacturing buffing pads according to the present invention as defined in claim 1, and a buffing pad according to the present invention as defined in claim 10.

Thus, in accordance with an aspect of the present invention, there is provided a method of manufacturing buffing pads by machine, comprising:
- preparing a front part, comprising:
   - preparing a buffing layer comprising standing threads, which comprise wool and synthetic strands;
   - applying a remeltable polymer, heated to a liquid state, to the rear side of the buffing layer, the remeltable polymer constituting a laminating layer;
- preparing a rear part, comprising:
   - preparing a backing layer, consisting of a cell foam plastic;
   - attaching an attachment layer to a rear side of the backing layer, the attachment layer comprising a hook and loop fastener; and
- joining the front part with the rear part, comprising:
   - reheating the laminating layer to an adhesive state; and
   - pressing a front side of the backing layer to a rear side of the laminating layer.

In accordance with another aspect of the invention, there is provided a method of manufacturing buffing pads by machine, comprising:
- forming a mat by means of:
   - providing a buffing layer comprising standing wool and synthetic threads;
   - applying a remeltable polymer, heated to a liquid state, to the back of the buffing layer, the remeltable polymer constituting a laminating layer;
   - joining the laminating layer with a backing layer, consisting of a cell foam plastic, said joining comprising reheating the laminating layer to a liquid state and pressing the backing layer to the laminating layer to join them;
   - attaching an attachment layer to a rear side of the backing layer, the attachment layer comprising a hook and loop fastener; and
- cutting the mat into buffing pads.

In accordance with yet another aspect of the invention, there is provided a buffing pad, comprising:
- a buffing layer comprising standing threads, which comprise wool and synthetic strands;
- a laminating layer, applied to a rear side of the buffing layer, the laminating layer consisting of a remeltable polymer;
- a backing layer which is attached to a rear side of the laminating layer by means of a heat bond; and
- an attachment layer, which is attached to a rear side of the backing layer, the attachment layer comprising a hook and loop fastener for attaching the surface finishing pad to a tool having a complementary hook and loop fastener.

By laminating the buffing layer with the cell foam plastic backing layer a strong laminate is obtained, which has a good firmness due to the cell foam plastic, while still being flexible enough to follow slightly curved or uneven surfaces. The cell foam plastic is capable of being compressed and expanded relatively quickly, thereby being capable of following the irregularities of the surface. The laminating layer is advantageous in that the manufacture becomes fast, and additionally the connection between the buffing layer and the backing layer becomes strong.

In accordance with an embodiment of the method the provision of a buffing layer comprises tufting the threads into a thread carrier layer, wherein the laminating layer covers the rear side of the carrier layer.

In this way it is possible to omit or at least simplify, the knitting that is conventionally performed in order to fasten the threads at the carrier layer.

In accordance with an embodiment, the backing layer is heated to a deformable state before it is joined with the laminating layer. By joining the thus heated layers, the adherence will be improved.

In accordance with an embodiment circular disks are cut out, and then joined to form a pad. This is preferred although not necessary. It would also be possible to form a large mat of pad material, from which, as a final measure, the circular pads are cut out. However, such a cutting operation would be more difficult.

In accordance with an embodiment, the remeltable polymer is latex. Latex is particularly appropriate, since it is impermeable to many chemicals, it has an appropriate consistence and softness, and it can be remelted.

In accordance with an embodiment, the cell foam plastic of the backing layer is Ethylene Vinyl Acetate (EVA).

In accordance with an embodiment the synthetic is acrylic. The combination of wool and acrylic has a very high performance.

These and other aspects, features, and advantages of the invention will be apparent from and elucidated with reference to the embodiments described hereinafter.

### BRIEF DESCRIPTION OF THE DRAWINGS

The invention will now be described in more detail and with reference to the appended drawings in which:
Fig. 1 is a cross-sectional view of an embodiment of a buffing pad according the present invention; and
Fig. 2 is a flow chart of an embodiment of a method of manufacturing buffing pads by machine according to the present invention.

### DESCRIPTION OF PREFERRED EMBODIMENTS

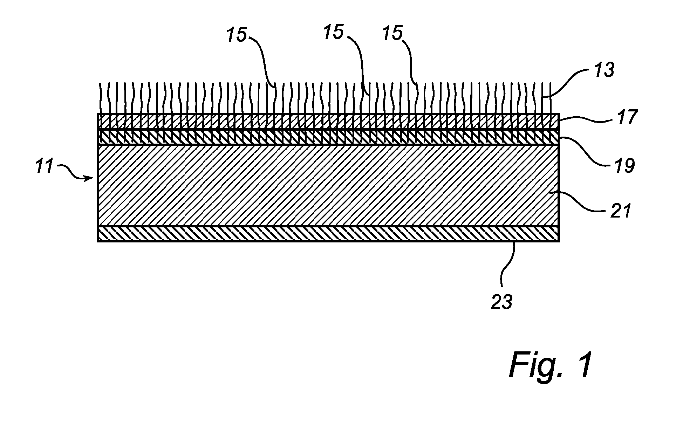

In an embodiment, as shown in Fig. 1, the buffing pad 11 consists of several layers having different functions. The front most layer is a buffing layer 13, which consists of a large number of threads 15, and a supporting fabric 17. It should be noted that the front of the buffing pad 11 as a whole is recognised as the side which will be put into contact with the surface that is to be buffed/polished. It should also be noted that, of course, the threads 15 are closely arranged, not thinly as it appears on the, most schematic, drawing. The threads 15 consist of a blend of wool and synthetic, more particularly acrylic. The acrylic preferably constitute at least 20%, and at most 80%, of the thread material. Preferably the threads are twisted threads, which could also be expressed as each thread is constituted by twisted strands. The diameter of the threads is typically about one or a few millimetres. The length of the threads is typically one or a few tens of millimetres. The threads 15 have been tufted into a thread carrier layer 17. This means that they have been arranged at a supporting fabric 17, such that one end of each thread has been hooked into the fabric 17 by machine, as schematically shown in Fig. 1. Preferably, the fabric is a thin plastic foil. The tufting is performed in a simple and fast way.

A laminating layer 19 covers the rear side of the thread carrier layer 17. The laminating layer 19 fixes, i.e. locks, the threads 15 so that they will not come loose when the buffing pad 11 is used. In this embodiment the laminating layer consists of latex, which is preferred. The fixing capability of the latex layer 19, inter alia, provides the advantage that there is no need to perform a conventional, and time/cost consuming full knitting of the threads into a fabric that provides a full fixing of the threads, although the present invention does not exclude such a knitting. The threads could even be merely inserted into, and slightly through, the fabric. Then the thread end portions protruding from the rear surface of the fabric are covered, and consequently fixed, by the laminating layer. Omitting the knitting procedure reduces the time of manufacture. Even more, some conventional wool thread pads are partly handmade, for instance as regards the fastening of the threads into a carrier layer.

Further, a backing layer 21, consisting of an EVA disc, is heat bond to the laminating layer 19. EVA is an abbreviation for Ethylene Vinyl Acetate. The thickness of the backing layer is at least about 10 mm, and typically about 10-40 mm, partly depending on the width of the buffing pad 11. The EVA has advantageous properties. Inter alia it provides a good stability, or firmness, to the buffing pad 11, partly due to its closed cells. At the same time the EVA is flexible to an extent that provides the buffing pad with a capability of following a non-planar surface. For example, the surface can be arched or domed, or it can have irregularities. After having been compressed the EVA regains its original shape rather fast, which enables the buffing pad to follow such deviations from a planar surface, at least to an extent being large enough to clearly and positively differentiate the present buffing pad 11 from the known wool/acrylic buffing pads mentioned above.

The final layer is an attachment layer 23, which is attached, preferably by means of an adhesive, to the rear side of the backing layer 21. The attachment layer is a hook and loop fastener, preferably a fabric comprising loops. A complementary hook and loop fastener, consequently a fastener comprising hooks, is arranged on the tool, for example a polishing machine, that the buffing pad 11 is intended for.

In an alternative embodiment the use of the buffing pad is additionally improved by having strands, for example some of the strands of each thread, of a deviating and distinctive colour. The colour differentiated strands are used as a wear indicator. A preferred realization of this concept is to colour the acrylic strands, or at least an amount thereof, in the deviating colour. When the buffing pad is being used the wool strands are worn faster than the acrylic strands. Assume, for example, that the dominating colour is white and the colour deviating strands are red. When a user starts to use a new pad it is perceived as white. When many of the wool strands have been worn out the perceived colour of the buffer pad has shifted towards red. This can be used as a signal for shifting pad to a new one.

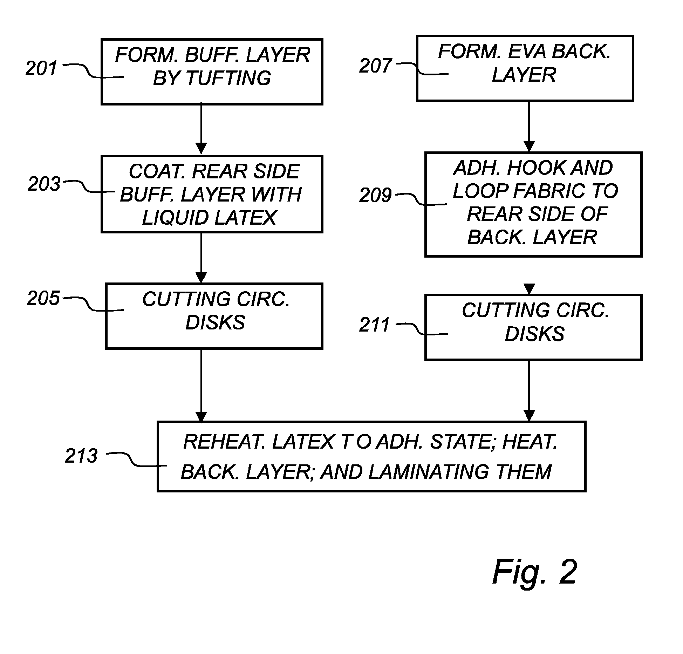

As schematically shown in the flow chart of Fig. 2 an embodiment of the method of manufacturing the buffing pad 11 is as follows.

Initially there are two parallel branches in the flow chart, which merge into one flow.

A first branch, to the left in Fig. 2, relates to the preparation of a front part of the resulting buffer pad, and a second branch, to the right in Fig. 2, relates to the preparation of a rear part of the buffer pad. In practise, the operations of the first and second branches can be performed at different times, or in parallel.

In the firsts branch, first, as shown in box 201 of Fig. 2, the buffing layer 13 is formed by tufting the wool/acrylic threads 15 into the thread carrier layer 17, which serves as a thread holder.

Then, as already explained above, the rear side of the supporting fabric 17 is covered by latex 19, which has been heated to a liquid state, see box 203. Thus, the supporting fabric 17 is covered with liquid latex, which then cools to solid state. The latex layer 19 fixes the threads and contribute with strength enough to retain the threads 15 when the buffing pad 11 is used for buffing. Since the latex layer provides the major retaining strength, the attachment of the threads to the carrier layer 17 does not have to be as strong as in the prior art buffing pads describe above. This simplifies the production.

Then, in box 205, the thus obtained buffing layer mat is cut into a plurality of circular disks.

In the second branch, first the backing layer 21 is formed from an EVA plastic, see box 207. In practise, an EVA mat can be obtained from a manufacturer in an appropriate thickness.

Next, the hook and loop fabric 23 is adhered to the rear side, i.e. the side that is to be used as the rear side, of the EVA mat by means of an adhesive, in box 209.

Then, in box 211, the thus obtained backing layer mat is cut into a plurality of circular disks.

In a final operation, see box 213, the first part disks are joined with the second part disks. This is done by reheating the latex to an adhesive state, simultaneously heating the backing layer to a deformable state, and pressing the rear side of the latex layer 19 against the front side of the backing layer 21. Thereby the buffing layer 13 is laminated with the backing layer 21 by means of the latex layer 19, which is therefore called the laminating layer 19, and circular buffing pads are finally formed. In the adhesive state the latex is preferably not fully liquid but merely made sticky.

The method is fully performed by machine. However, since the invention relates to the buffing pad and the method for manufacturing the pad it is believed not necessary to show the very machine as such.

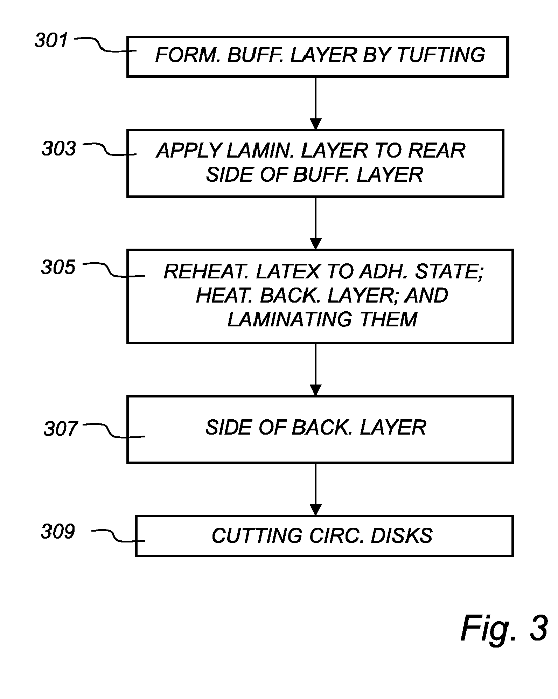

According to an alternative embodiment of the method, as shown in Fig. 3, a large mat, consisting of the layers described above, is formed. Then buffing pads are cut out of the mat, for example by means of punching, water jet cutting, or any other suitable cutting method. This embodiment of the method includes many operations that are similar to those of the embodiment described above. The similar operations will only be briefly described.

First, in box 301, the buffing layer 13 is formed as described above. Then, in box 303, the rear side of the supporting fabric 17 is covered by the laminating layer, such as latex, 19 as described above. Next, in box 305, the mat, now consisting of buffing and laminating layers, is provided with the backing layer, such as an EVA plate, 21. The joining of the laminating and backing layers is done by means of reheating the laminating layer, etc., as described above.

Then, in box 307, the attachment layer, such as a hook and loop fabric, 23 is adhered by means of an adhesive to the rear side of the backing layer 21.

Finally, in box 309, circular buffing pads are cut from the thus obtained buffing mat.

Above, embodiments of the buffing pad and of the manufacturing method according to the present invention have been described. These should be seen as merely nonlimiting examples. As understood by a skilled person, many modifications and alternative embodiments are possible within the scope of the invention.

For example, although having excellent properties, some other appropriate remeltable polymer can be used instead of the latex material. However, the substitute material should have approximately the same material properties.

Further, EVA is one of several useful closed-cell foam plastics.

The manufacturing method can be expanded by a stabilisation operation. In this operation the threads are treated chemically, which causes the acrylic strands and the wool strands to slightly engage and form a kind of a unit. This improves the performance of the buffing pads.

It is to be noted, that for the purposes of this application, and in particular with regard to the appended claims, the word "comprising" does not exclude other elements or steps, that the word "a" or "an", does not exclude a plurality, which per se will be apparent to a person skilled in the art.

## Claims

1. A method of manufacturing buffing pads by machine, comprising:
- preparing a front part, comprising:
- preparing a buffing layer comprising standing threads, which comprise wool and synthetic strands;
- applying a remeltable polymer, heated to a liquid state, to the rear side of the buffing layer, the remeltable polymer constituting a laminating layer;
- preparing a rear part, comprising:
- preparing a backing layer, consisting of a cell foam plastic;
- attaching an attachment layer to a rear side of the backing layer, the attachment layer comprising a hook and loop fastener; and
- joining the front part with the rear part, comprising:
- reheating the laminating layer to an adhesive state; and
- pressing a front side of the backing layer to a rear side of the laminating layer.

2. A method of manufacturing buffing pads by machine according to claim 1, wherein said providing a buffing layer comprises:
- tufting the threads into a thread carrier layer, wherein the laminating layer covers the rear side of the carrier layer.

3. A method of manufacturing buffing pads by machine according to claim 1 or 2, wherein said joining the front part with the rear part further comprises:
- heating the backing layer to a deformable state before said pressing.

4. A method of manufacturing buffing pads by machine according to any one of the preceding claims, wherein said preparing a front part further comprises:
- cutting out first circular disks of the buffing layer;
wherein said preparing a rear part further comprises:
- cutting out second circular disks of the backing layer; and
wherein, when joining the front part with the rear part, each one of the first circular disks is joined with a respective one of the second circular disks.

5. A method of manufacturing buffing pads by machine according to any one of the preceding claims, further comprising treating chemically the threads for bonding the synthetic strands to the wool strands.

6. A method according to any one of the preceding claims, wherein said laminating layer fixes the threads.

7. A method according to any one of the preceding claims, wherein said remeltable polymer is latex.

8. A buffing pad comprising:
- a buffing layer comprising standing threads, which comprise wool and synthetic strands;
- a laminating layer, applied to a rear side of the buffing layer, the laminating layer consisting of a remeltable polymer;
- a backing layer which is attached to a rear side of the laminating layer by means of a heat bond; and
- an attachment layer, which is attached to a rear side of the backing layer, the attachment layer comprising a hook and loop fastener for attaching the surface finishing pad to a tool having a complementary hook and loop fastener.

9. A buffing pad according to claim 8, wherein said remeltable polymer is latex.

10. A method of manufacturing buffing pads by machine, comprising:
- forming a mat by means of:
- providing a buffing layer comprising standing wool and synthetic threads;
- applying a remeltable polymer, heated to a liquid state, to the back of the buffing layer, the remeltable polymer constituting a laminating layer;
- joining the laminating layer with a backing layer, consisting of a cell foam plastic, said joining comprising reheating the laminating layer to a liquid state and pressing the backing layer to the laminating layer to join them;
- attaching an attachment layer to a rear side of the backing layer, the attachment layer comprising a hook and loop fastener; and
- cutting the mat into buffing pads.

11. A method of manufacturing buffing pads by machine according to claim 10, wherein said joining the laminating layer with a backing layer further comprises:
- heating the backing layer to a deformable state before said pressing.
